# EUROPÄISCHE PATENTANMELDUNG

(11) **EP 1 953 060 A1**
(43) Veröffentlichungstag der Anmeldung: **06.08.2008**
(21) Anmeldenummer: 08000439.3
(22) Anmeldetag: 11.01.2008
(51) Int. Cl.: B60W 40/10, B60W 50/02

(54) **Verfahren zur Überwachung des Betriebs eines Kraftfahrzeugs**

(30) Priorität: 31.01.2007 DE 102007004753
(71) Anmelder: LuK Lamellen und Kupplungsbau Beteiligungs KG, 77815 Bühl (DE)
(72) Erfinder: Schuhen, Michael, 77830 Bühlertal (DE); Helmbrecht, Lutz, 77836 Rheinmünster (DE)

(57) **Zusammenfassung**

Verfahren zur Überwachung des Betriebs eines Kraftfahrzeugs, wobei Raddrehzahlfehler vom Steuergerät eines automatisierten Schaltgetriebes (ASG) unter Berücksichtigung der Drehzahlen mindestens eines Rades des Kraftfahrzeugs erfasst werden und unter Berücksichtigung der Validierungssignale des Steuergerätes mindestens eines weiteren automatisierten Fahrzeugsystems die erfassten Raddrehzahlfehler plausibilisiert werden.

## Beschreibung

Die vorliegende Erfindung befasst sich mit einem Verfahren zur Überwachung des Betriebs eines Kraftfahrzeugs, wobei Raddrehzahlfehler unter Berücksichtigung von Drehzahlen mindestens eines Rades des Kraftfahrzeugs erfasst werden, gemäß dem Oberbegriff des Anspruch 1.

Für die zuverlässige Funktion automatisierter Kupplungen und Getriebe, automatisierter Fahrdynamik- und Bremssysteme und ähnlichem in Kraftfahrzeugen ist die genaue Kenntnis der Raddrehzahlen von erheblicher Bedeutung.

Als eine Ausgestaltung zur Überwachung eines Kraftfahrzeugs offenbart DE 694 01 411 T2 ein System zur Detektion von Änderungen des Reifendrucks. Dabei wird davon ausgegangen, dass sich die unterschiedlichen Reifendrücke in unterschiedlichen Raddrehzahlen niederschlagen und so aus der Erfassung der Raddrehzahlen und weiterer Parameter, wie der Beschleunigung und des Lenkwinkels, sich ein Luftdruckabfall in einem oder mehreren Reifen erkennen lässt.

Im Stand der Technik werden Raddrehzahlfehler der angetriebenen Räder des Kraftfahrzeugs durch zwei unabhängige, aber parallel ablaufende Verfahren detektiert, die im Steuergerät eines automatisierten Schaltgetriebes (ASG) implementiert sind.

In einem ersten Verfahren werden die Raddrehzahlgradienten, also die Veränderungen der Raddrehzahl mindestens eines der angetriebenen Räder über die Zeit, ermittelt und mit einem Grenzwert, der vorher bekannt ist oder berechnet wird, verglichen. Überschreitet der Raddrehzahlgradient den Grenzwert, so wird ein Raddrehzahlfehler als erkannt angenommen.

In einem zweiten Verfahren wird die ermittelte Raddrehzahl, bzw. der Mittelwert der ermittelten Raddrehzahlen mit der Drehzahl des Antriebsmotors des Kraftfahrzeugs korreliert. Dazu ist es nötig, dass die Kupplung geschlossen ist, so dass das Motordrehmoment auf die Antriebsräder übertragen wird und dass die Getriebeeinstellung bekannt ist. Ist die Differenz zwischen der Raddrehzahl und einem aus der Motordrehzahl abgeleiteten Wert der Raddrehzahl größer als ein Grenzwert, so wird ein Raddrehzahlfehler angenommen.

Als Reaktion auf das Erkennen eines Raddrehzahlfehlers werden bei beiden Verfahren Ersatzmaßnahmen eingeleitet und evtl. Fehlerspeichereinträge gesetzt.

Die beiden Verfahren werden jeweils sowohl zur Erkennung eines Raddrehzahlfehlers eingesetzt, als auch zur Plausibilisierung eines von dem jeweils anderen Verfahren erkannten Raddrehzahlfehlers. So wird bei höheren Geschwindigkeiten des Fahrzeugs ein Raddrehzahlfehler bevorzugt mittels der Gradienten-Methode erfasst, die in der Praxis sehr viel schneller als die Raddrehzahl-Motordrehzahl-Korrelationsmethode einen Raddrehzahlfehler erkennt. Dieser durch die Gradienten-Methode erkannte Raddrehzahlfehler wird jedoch in einem zweiten Schritt durch die Raddrehzahl-Motordrehzahl-Korrelationsmethode plausibilisiert, um nicht unangebrachte Ersatzmaßnahmen einzuleiten.

Bei geringen Fahrzeuggeschwindigkeiten ist es nur durch die Raddrehzahl-Motordrehzahl-Korrelation möglich, einen Raddrehzahlfehler zu erkennen. Dazu ist es jedoch notwendig, dass die Kupplung geschlossen ist und bei geschlossener Kupplung kein Schlupf vorliegt.

Jedoch weisen die Verfahren aus dem Stand der Technik Nachteile auf, so dass unter Umständen ein Raddrehzahlfehler angenommen wird und eine entsprechende Ersatzmaßnahme, wie ein "Shut-Down", eingeleitet wird, ohne dass ein Raddrehzahlfehler tatsächlich vorliegt. So kann im Fall einer verschlissenen Kupplung bei geschlossener Kupplung mehr Motormoment vom Fahrer angefordert werden, als von der Kupplung übertragen werden kann. Dabei kann Schlupf an der Kupplung auftreten, was mittels der Raddrehzahl-Motordrehzahl-Korrelation zu einer fälschlichen Detektion eines Raddrehzahlfehlers führt.

Auch kann es insbesondere bei Bergfahrten zu einem Kupplungs-Fading kommen. Dabei wird durch Überhitzung der Kupplung die Eignung der Kupplung ein großes Motormoment zu übertragen herabgesetzt und es kommt trotz geschlossener Kupplung zu Kupplungsschlupf. In diesem Fall wird ebenfalls durch die Raddrehzahl-Motordrehzahl-Korrelationsmethode ein Raddrehzahlfehler erkannt, der nicht vorhanden ist und es werden Ersatzmaßnahmen entsprechend dem vermeintlichen Raddrehzahlfehler eingeleitet.

DE 10 2005 019 062 desselben Anmelders beschreibt ein Verfahren zur Erkennung von Raddrehzahlfehlern, die unter bestimmten Bedingungen auftreten, wenn das Fahrzeug in Betrieb genommen wird. Aber auch hier wird nicht beschrieben, wie eine falsche Raddrehzahlfehlererkennung im Betrieb des Fahrzeugs vermieden werden kann.

Aufgabe der Erfindung ist es ein Verfahren zur Überwachung des Betriebs eines Kraftfahrzeugs bereitzustellen, das die Nachteile des Standes der Technik zumindest teilweise beseitigt.

Die Aufgabe wird gelöst durch ein Verfahren mit den Merkmalen, wie in Anspruch 1 beschrieben, insbesondere durch ein Verfahren zur Überwachung des Betriebs eines Kraftfahrzeugs, wobei Raddrehzahlfehler im Steuergerät des ASG unter Berücksichtigung von Drehzahlen mindestens eines Rades des Kraftfahrzeugs erkannt werden und unter Berücksichtigung der Gültigkeitssignale mindestens eines weiteren Fahrzeugsteuergerätes die erkannten Raddrehzahlfehler plausibilisiert werden.

Bevorzugte Ausführungsformen finden sich in den Unteransprüchen.

Systeme zur Automatisierung des Antriebsstranges, automatisierte Fahrdynamik- und Bremssysteme etc. weisen oftmals Drehzahlsensoren auf, die die Drehzahl der Antriebsräder erfassen. Um eine zuverlässige Raddrehzahlermittlung zu gewährleisten, sind solche Systeme mit einem Validierungssystem ausgestattet, das angibt, ob die erfassten Raddrehzahlen gültig oder ungültig sind. Nun ist es ein Kerngedanke der Erfindung, dass die Raddrehzahlen im Steuergerät des ASG über ein gesondertes Verfahren, wie die Gradienten-Methode und/oder die Raddrehzahl-Motordrehzahl-Korrelationsmethode, aber auch jede andere Methode, erfasst werden. Ist ein Raddrehzahlfehler bzw. ein vermeintlicher Raddrehzahlfehler erkannt worden, so wird anhand des Validierungssystems mindestens eines weiteren automatisierten Systems dieser evtl. vermeintliche Raddrehzahlfehler plausibilisiert. Dass heißt es wird, wenn das Validierungssystem ebenfalls eine Ungültigkeit der Raddrehzahlen angibt, dieser Raddrehzahlfehler als erfasst angenommen und eine entsprechende Maßnahme getroffen.

Wird der vom gesonderten Verfahren, wie die Gradienten-Methode und/oder die Raddrehzahl-Motordrehzahl-Korrelationsmethode, erkannte Raddrehzahlfehler von dem Validierungssystem nicht erkannt, also die Raddrehzahlen als gültig gekennzeichnet, so wird entweder der durch das gesonderte Verfahren angezeigte Raddrehzahlfehler als nicht vorhanden angenommen oder es werden weitere Verfahren bzw. Parameter hinzugezogen, um den durch das gesonderte Verfahren angezeigten Raddrehzahlfehler hierdurch auf andere Ursachen zurückzuführen bzw. den Raddrehzahlfehler durch diese weiteren Verfahren oder Parameter doch zu verifizieren.

Mit Raddrehzahlfehlern sind in dieser Beschreibung auch beidseitige Raddrehzahlfehler, insbesondere der Antriebsräder, oder aber auch Raddrehzahlfehler an vier Rädern, insbesondere bei so genannten Allradantrieben gemeint.

In einer bevorzugten Ausführungsform werden Raddrehzahlfehler während der Fahrt des Kraftfahrzeugs erfasst. Gerade während der Fahrt ist es kritisch, wenn die von den Raddrehzahlsensoren ermittelten Werte nicht korrekt sind. Dies kann insbesondere dazu führen, dass eine falsche Geschwindigkeit des Fahrzeugs von einer den Betrieb des Fahrzeugs überwachenden und/oder regelnden Vorrichtung angenommen wird und das Fahrzeug dementsprechend gesteuert wird.

Insbesondere können die Raddrehzahlfehler mittels einer Korrelation zwischen der Antriebsmotordrehzahl und den Raddrehzahlen erkannt werden. So kann aus der Antriebsmotordrehzahl unter Berücksichtigung der Fahrgangwahl des mit dem Antriebsmotor funktionell verbundenen Getriebes eine abgeleitete Größe ermittelt werden, die den Raddrehzahlen entspricht. Ist der Unterschied zwischen den gemessenen Raddrehzahlen der Antriebsräder und den von der Antriebsmotordrehzahl abgeleiteten Drehzahl größer als ein Grenzwert, so können vorläufige Raddrehzahlfehler erkannt werden. Diese Raddrehzahlfehler können nun in einem weiteren Schritt darauf geprüft werden, ob vom Validierungssystem im Steuergerät eines weiteren automatisierten Systems ein oder mehrere Signale ausgibt oder innerhalb einer Zeitspanne ausgegeben hat, die darauf schließen lassen, dass die Raddrehzahlen ungültig, d. h. fehlerhaft sind. Sind solche Signale vorhanden, so kann bei einem ermittelten Raddrehzahlfehler eine Ersatzmaßnahme eingeleitet werden und ein Fehlereintrag in einem im Steuergerät des ASG dafür vorgesehenen Speicherbereich eingetragen werden. Kennzeichnet das Validierungssystem des weiteren automatisierten Systems die Raddrehzahl als gültig, d. h. fehlerfrei, , so kann eine Ersatzmaßnahme entfallen, der Raddrehzahlfehler durch andere Parameter verifiziert werden oder eine alternative Ersatzmaßnahme ergriffen werden. Auf diese Art kann die Ersatzmaßnahme der Art der Raddrehzahlfehlermeldungen angepasst werden.

Auch können die Raddrehzahlfehler mittels eines Vergleichs zwischen einem Gradienten der Raddrehzahlen mit einem Grenzwert erfasst werden. Dieser Vergleich kann sowohl parallel zu der oben beschriebenen Raddrehzahl-Motordrehzahl-Korrelation verwendet werden oder auch einzeln. Dazu können die Raddrehzahlen an verschiedenen Zeitpunkten ermittelt werden und anschließend aus zwei oder mehreren der ermittelten Raddrehzahlen ein Gradient gebildet werden, also die Veränderung der Raddrehzahlen über der Zeit. Ist diese Veränderung größer als ein bestimmter, vorher festgelegter oder berechneter Grenzwert, so kann ein Raddrehzahlfehler angenommen werden. Dieser angenommene Raddrehzahlfehler, kann nun in einem weiteren Schritt durch die Raddrehzahl-Motordrehzahl-Korrelationssmethode bestätigt werden, so dass Fehler bei der Berechnung des Gradienten etc. ausgeschlossen werden. Jedoch kann die Raddrehzahlfehlerermittlung auch ohne die Raddrehzahl-Motordrehzahl-Korrelationsmethode durchgeführt werden und so Kosten gespart werden. In einem weiteren Schritt oder parallel wird ermittelt, ob ein oder mehrere Signale eines Validierungssystems mindestens eines weiteren automatisierten Systems vorliegen, welche die Raddrehzahlen als gültig kennzeichnen. Dabei kann auch das Fehlen eines Gültigkeitssignals des weiteren automatisierten Systems als Ungültigkeitssignal gewertet werden und umgekehrt. Liegen ein oder mehrere Gültigkeitssignale vor, so können die für Raddrehzahlfehler vorgesehenen Ersatzmaßnahmen unterbleiben und evtl. andere Ersatzmaßnahmen durchgeführt werden.

In einer weiteren Ausführungsform umfasst das Kraftfahrzeug ein Antiblockiersystem (ABS). Solche Systeme erfassen in der Regel die Raddrehzahlen der Räder, um zu erkennen, ob ein Rad blockiert ist, sich also nicht mehr dreht. Diese Raddrehzahlsensoren können verwendet werden, um dem erfindungsgemäßen Verfahren die Raddrehzahlen zukommen zu lassen. So kann eine weitere Anordnung von Raddrehzahlsensoren vermieden werden.

In einer bevorzugten Ausführungsform können aus der Überwachung der Raddrehzahlen und der Plausibilisierung der Raddrehzahlfehler Informationen über den Zustand der Kraftfahrzeugkupplung erhalten werden. Mit anderen Worten kann durch den Vergleich der Raddrehzahlfehler, die vom ABS erkannt bzw. verifiziert werden und den Raddrehzahlfehlern, die durch ein System, dass die Messwerte der Raddrehzahlsensoren verwendet, erkannt werden, darauf geschlossen werden, ob in der Tat ein Raddrehzahlfehler oder ein Fehler im Triebstrang, zum Beispiel in der Kupplung, vorliegt. Wird zum Beispiel erkannt, dass ein Fehler in der Kupplung vorliegt, da die Vergleichsmethode zwischen der Motordrehzahl und den Raddrehzahlen einen Raddrehzahlfehler vorgibt, jedoch das ABS keinen solchen Fehler ermittelt, so kann eine entsprechende Maßnahme ergriffen werden. Eine solche Maßnahme kann ein Öffnen der Kupplung sein, ein Reduzieren des Motormoments etc.

Insbesondere kann zur Klassifizierung des Kupplungszustands das Motormoment berücksichtigt werden. Es kann also bei Vorliegen eines Gültigkeitssignals des ABS und insbesondere einer Fehlererkennung durch den Vergleich zwischen Raddrehzahl und Motordrehzahl erkannt werden, dass evtl. an der Kupplung Schlupf vorhanden ist. Da die Raddrehzahl-Motordrehzahl-Korrelationsmethode insbesondere angewandt wird, wenn die Kupplung geschlossen ist, kann der Schlupf zum Beispiel durch eine erhöhte Kupplungstemperatur oder bei einer Kupplung mit zu geringer Momentenkapazität auftreten. In beiden Fällen können von der Fahrzeugsteuerung Maßnahmen ergriffen werden, um den Schlupf zu mindern, zum Beispiel indem das Motormoment verringert wird.

Insbesondere kann zur Klassifizierung des Kupplungszustands die Kupplungstemperatur berücksichtigt werden. Liegt ein Gültigkeitssignal vor, ist jedoch von der Raddrehzahl-Motordrehzahl-Korrelationsmethode ein Drehzahlfehler erkannt worden, so kann, insbesondere wenn die Gradientenmethode keinen solchen Fehler erkennt, davon ausgegangen werden, dass ein Fehler im Kupplungszustand vorliegt. Dieser Fehler kann in einer überhitzten Kupplung liegen, an der ein zu großes Moment anliegt. Dies kann in einem weiteren Schritt erkannt werden, indem die Temperatur der Kupplung ermittelt wird. Liegt die Temperatur der Kupplung über einem Schwellenwert und das an der Kupplung anliegende Motormoment über einem zweiten Schwellenwert, so können Maßnahmen ergriffen werden, um das anliegende Moment zu verkleinern und/oder die Temperatur der Kupplung zu verringern.

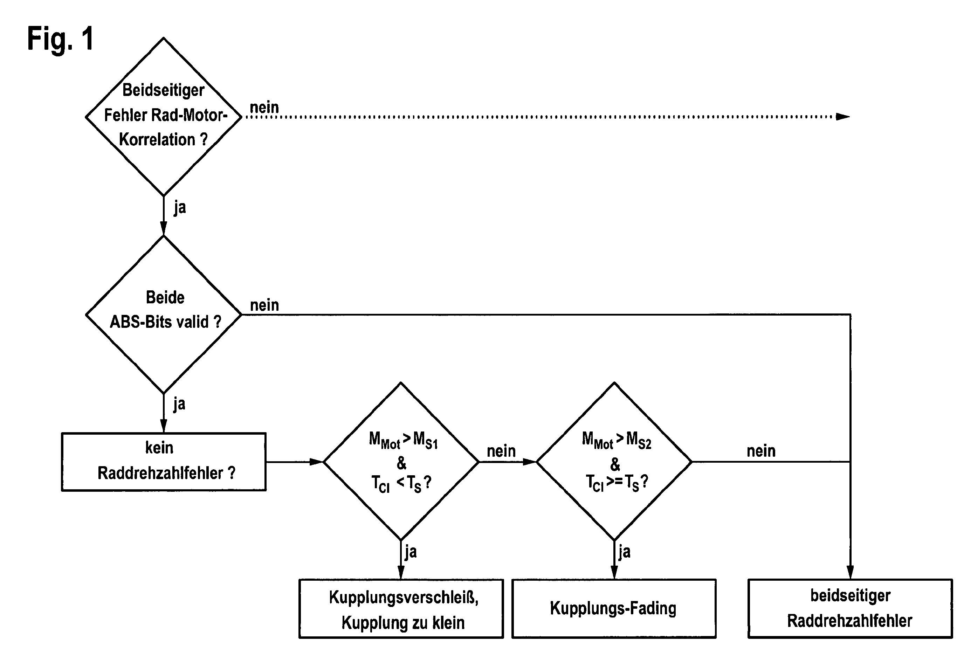

Weitere Vorteile und vorteilhafte Ausgestaltungen der Erfindung sind Gegenstand der nachfolgenden Figur 1 sowie deren Beschreibung.

Fig. 1 zeigt ein Flußdiagramm über den Ablauf eines erfindungsgemäßen Verfahrens.

In einem ersten Verfahrensschritt des Verfahrens zur Überwachung des Betriebs eines Kraftfahrzeugs wird durch eine Raddrehzahl-Motordrehzahl-Korrelation - verkürzt auch Rad-Motor-Korrelation genannt - ermittelt, ob ein beidseitiger Raddrehzahlfehler vorliegt. Dazu wird zuerst ermittelt, ob die Kupplung sich in einem geschlossenen Zustand befindet. Ist dies der Fall, werden die Radrehzahlen, die von den Drehzahlsensoren der Räder stammen mit einem Wert verglichen, der aus der Motordrehzahl und der Übersetzung des Getriebes ermittelt wird. Ist der Betrag des Unterschieds U der beiden Werte größer als ein Grenzwert G1, so erkennt die Rad-Motorkorrelation einen Raddrehzahlfehler. Ist der Wert U kleiner als der Grenzwert G1, so wird keine Fehlermaßnahme unternommen.

Liegt eine Erkennung eines beidseitigen Raddrehzahlfehlers durch die Raddrehzahl-Motordrehzahl-Korrelationsmethode vor, so wird geprüft, ob ein weiteres automatisiertes System, insbesondere ein ABS-System, Signale liefert, die auf eine Ungültigkeit der Raddrehzahlwerte schließen lassen. Diese Signale können zum Beispiel die Zustände gültig - auch als valid bezeichnet - bzw. ungültig darstellen. Beinhalten also beide ABS-Signale den Zustandgültig, also die Signale der Drehzahlsensoren beider Antriebsräder werden als gültig gekennzeichnet, so wird weiter geprüft, ob ein Raddrehzahlfehler vorliegt. Beinhaltet ein ABS-Signal den Zustand ungültig, also ist mindestens ein Signal der Raddrehzahlsensoren der beiden Antriebsräder als ungültig gekennzeichnet, so wird der beidseitige Raddrehzahlfehler, der von der Raddrehzahl-Motordrehzahl-Korrelationsmethode erfasst wurde, als bestätigt angesehen und eine entsprechende Maßnahme durch die Steuerung des ASG vorgenommen.

Liegt eine Kennzeichnung der beiden ABS-Signale als gültig vor, wird geprüft, ob das Motormoment MMot, dass an der Kupplung anliegt, größer ist als ein erster Grenzwert Ms1 und ob die Temperatur TCI kleiner ist als eine Grenztemperatur Ts. Liegen beide Bedingungen vor, so wird von der Fahrzeugsteuerung erkannt, dass kein Raddrehzahlfehler vorliegt, sondern entweder die Kupplung zu klein dimensioniert ist und/oder ein Kupplungsverschleiß vorliegt und deshalb ein Schlupf in der Kupplung auftritt.

Liegen die beiden Bedingungen MMot> MS1 und TCI < TS nicht vor, wird geprüft, ob das Motormoment MMot größer als ein Grenzwert MS2 ist und ob die Kupplungstemperatur TCI größer gleich einer Temperatur TS ist. Sind diese beiden Bedingungen gegeben, nimmt die Fahrzeugsteuerung an, dass die Kupplung überhitzt ist und ein Kupplungsfading auftritt. In diesem Fall wird eine entsprechende Ersatzmaßnahme ergriffen. Liegen auch diese Bedingungen nicht vor, so wird angenommen, dass trotz beidseitiger Kennzeichnung der Drehzahlsensorsignale durch Gültigkeitssignale - auch Validierungssignale genannt - vom ABS ein beidseitiger Drehzahlfehler vorliegt, was wiederum Notfallmaßnahmen durch die Steuerung des ASG nach sich zieht.

In einem weiteren Ausführungsbeispiel kann auf die Erfassung der Kupplungstemperatur verzichtet werden, wobei dann eine Unterscheidung zwischen Kupplungsverschleiß und Kupplungsfading unterbleibt.

Auch können weitere Mess- und Software-Größen für die Klassifizierung des Kupplungszustandes bzw. von Kupplungsfehlfunktionen genutzt werden.

Auch ist eine Erweiterung des Verfahrens für Fahrzeuge mit einem Vierradantrieb bzw. für Fahrzeuge mit einem Antrieb von mehr als 4 Rädern durch eine entsprechende Erweiterung auf die entsprechenden Antriebsräder möglich.

### Bezugszeichenliste

M_{Mot} Motormoment
M_{S1} erster Grenzwert für das Motormoment
M_{S2} zweiter Grenzwert für das Motormoment
T_{Cl} Temperatur der Kupplung
T_{S} Grenzwert für die Kupplungstemperatur

## Patentansprüche

1. Verfahren zur Überwachung des Betriebs eines Kraftfahrzeugs, wobei Raddrehzahlfehler unter Berücksichtigung der Drehzahlen mindestens eines Rades des Kraftfahrzeugs erfasst werden, **dadurch gekennzeichnet, dass** unter Berücksichtigung der Validierungssignale mindestens eines weiteren automatisierten Fahrzeugsystems die erfassten Raddrehzahlfehler plausibilisiert werden.

2. Verfahren zur Überwachung des Betriebs eines Kraftfahrzeugs nach dem vorhergehenden Anspruch, **dadurch gekennzeichnet, dass** die Raddrehzahlfehler während der Fahrt des Kraftfahrzeugs erfasst werden.

3. Verfahren nach einem der vorangegangenen Ansprüche, **dadurch gekennzeichnet, dass** die Raddrehzahlfehler mittels einer Korrelation zwischen der Antriebsmotordrehzahl und den Raddrehzahlen erfasst werden.

4. Verfahren nach einem der vorangegangenen Ansprüche, **dadurch gekennzeichnet, dass** die Raddrehzahlfehler mittels einem Vergleich eines Gradienten der Raddrehzahlen mit einem Grenzwert erfasst werden.

5. Verfahren nach einem der vorangegangenen Ansprüche, **dadurch gekennzeichnet, dass** das weitere automatisierte Fahrzeugssystem die Funktionalität eines Antiblockiersystems (ABS) umfasst.

6. Verfahren nach einem der vorangegangenen Ansprüche, **dadurch gekennzeichnet, dass** aus der Überwachung der Raddrehzahlen und der Plausibilisierung der Raddrehzahlfehlern Informationen über den Zustand der Kraftfahrzeugkupplung erhalten werden.

7. Verfahren nach dem vorangegangenen Anspruch, **dadurch gekennzeichnet, dass** zur Klassifizierung des Kupplungszustands das Motormoment berücksichtigt wird.

8. Verfahren nach einem der vorangegangenen Ansprüche 6 und 7, **dadurch gekennzeichnet, dass** zur Klassifizierung des Kupplungszustands die Kupplungstemperatur berücksichtigt wird
